# FASCICULE DE BREVET EUROPEEN

(11) **EP 0 369 894 B1**
(45) Date de publication et mention de la délivrance du brevet: **05.05.1993**
(21) Numéro de dépôt: 89420319.9
(22) Date de dépôt: 30.08.1989
(51) Int. Cl.: G01G 19/02

(54) **Pont-bascule de pesage à structure modulaire**
Wiegebrücke mit Modulstruktur
Weighing bridge with a modular structure

(30) Priorité: 18.11.1988 FR 8815491
(43) Date de publication de la demande: 23.05.1990
(73) Titulaire: Société dite: PRECIA, 07001 Privas (FR)
(72) Inventeur: Escharavil, Jean, 07000 - Privas (FR); Reygnier, Michel, F-07000 Privas (FR); Sautaz, Jean-Louis, Alissas F-07210 Chomerac (FR)
(74) Mandataire: Arbousse-Bastide, Jean-Claude P.

(56) Documents cités:
- FR-A- 1 194 316
- FR-A- 2 602 527
- GB-A- 2 042 742
- GB-A- 2 076 977

## Description

La présente invention concerne un pont-bascule de pesage d'un type nouveau, susceptible notamment d'être réalisé avec une structure modulaire. Une telle structure peut être obtenue à partir d'éléments standard.

On sait que sur un pont-bascule de pesage électronique de type connu, le récepteur de charge est constitué le plus souvent par une dalle de béton coulée sur une charpente métallique. Cette charpente comprend habituellement deux longerons reliés centre eux par des entretoises. Dans certains cas, on complète ou on remplace la dalle de béton par des panneaux en béton, fixés sur la charpente. L'ensemble de cette charpente métallique repose sur des capteurs à jauges de contraintes par l'intermédiaire de grains sphériques ou de paliers à billes. Les débattements du tablier sont limités par des butées de chocs(la partie mâle des butées est fixée sur les entretoises, alors que leur partie femelle est scellée dans les murs d'extrémités de la fosse où se trouve logée la dalle de béton).

Cette structure connue oblige à aménager dans le sol une fosse relativement profonde, couramment de 800 à 1200 mm.

De plus, sur l'appareil installé, l'accès aux capteurs se fait par des trappes à prévoir spécialement dans la dalle de béton ou dans le tablier métallique.

Enfin, la réalisation correcte de la dalle en béton est particulièrement délicate.

Elle exige :
- le positionnement parfait du cadre d'entourage;
- la mise en place d'un coffrage de bois fortement étayé.

Du fait de la faible hauteur disponible, les opérations de coffrage et de décoffrage sont toujours difficiles.

La présente invention a pour but d'éviter ces inconvénients pour réduire le coût de fabrication du pont-bascule,tout en facilitant à la fois la construction et les opérations d'entretien en service.

Un pont-bascule selon l'invention comprend une fosse sur le fond de laquelle sont posés des capteurs à jauges de contrainte, sur lesquels est posé à son tour un tablier alors que des butées de choc sont prévues pour limiter les débattements du tablier dans la fosse, et il est caractérisé en ce que le tablier possède une structure composite formée à partir de modules de pesage monoblocs standard, reliés entre eux par des longerons incorporés à des panneaux de béton.

Suivant un mode particulier, chaque module de pesage standard comprend :
- un panneau métallique démontable;
- des capteurs à jauges de contrainte;
- un ensemble de butées de chocs prépositionnées pour le scellement dans la fosse;
- un boîtier de raccordement des capteurs.

Suivant un autre mode particulier, les capteurs à jauges de contrainte sont munis de supports et de paliers à billes.

Suivant un autre mode particulier, chaque module est pourvu de moyens de levage permettant de le positionner à niveau au-dessus du fond de la fosse.

Suivant un autre mode particulier chaque butée comprend une partie mâle et une partie femelle, dont l'une est à sceller dans la fosse.

Suivant un autre mode particulier,les modules sont reliés entre eux par au moins deux longerons auxquels ils sont fixés et qui constituent par ailleurs les coffrages latéraux dans lesquels sont coulés les panneaux de béton complétant la dalle du tablier.

Suivant un autre mode particulier, le coffrage inférieur des panneaux de béton est constitué par des hourdis portés par les longerons.

Suivant un autre mode particulier, les longerons sont des fers en I sur l'aile inférieure desquels sont posées des poutrelles transversales supportant les hourdis.

Suivant un autre mode particulier,chaque poutrelle est préfabriquée en béton, incorporant une partie importante du ferraillage des panneaux de béton à couler pour compléter la dalle.

Le dessin annexé, donné à titre d'exemple non limitatif, permettra de mieux comprendre l'invention et les avantages qu'elle est susceptible de procurer.

Fig. 1. est une coupe suivant I - I (fig. 2) d'un pont-bascule dit "tout électronique" de type connu.

Fig. 2. en est une vue en plan.

Fig. 3. est une coupe suivant III - III (fig. 2)

Fig. 4. est une vue éclatée montrant en perspective un module standard de pesage selon l'invention.

Fig. 5. est une vue éclatée illustrant la position du module entre les longerons et traverses du tablier.

Fig. 6. est une coupe suivant VI - VI (fig. 7) montrant la structure à hourdis d'un des panneaux de béton.

Fig. 7. montre un tablier de pesage selon l'invention réalisé à partir de deux modules standard.

Fig. 8 et 9 montrent des tabliers réalisés respectivement à partir de trois, puis de quatre modules standard.

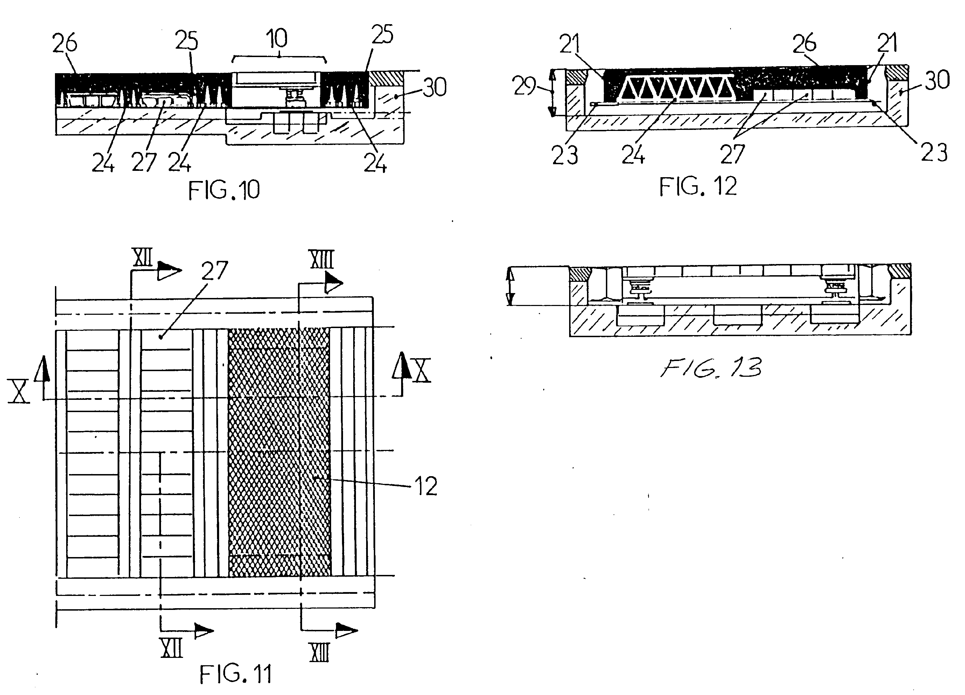

Fig. 10. est une coupe verticale suivant X - X (fig. 11) d'un pont-bascule selon l'invention.

Fig. 11. en est une vue en plan.

Fig. 12 et 13 sont des coupes respectivement suivant XII - XII et XIII - XIII (fig. 11).

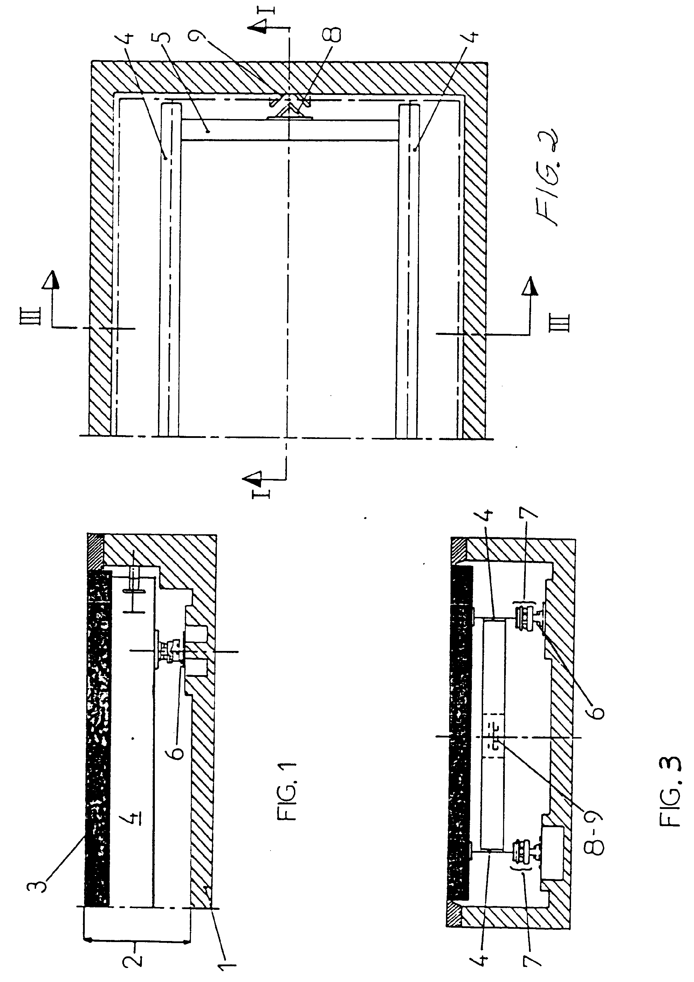

On a représenté sur les Fig. 1 à 3 un pont-bascule de type connu.

Une fosse bétonnée 1 est aménagée dans le sol avec une profondeur 2 couramment de l'ordre de 800 à 1200 mm. Dans sa partie supérieure est logée une dalle de béton 3 coulée en place sur une charpente métallique. Cette dernière est formée par deux longerons 4 reliés par des entretoises transversales 5. Cette charpente métallique 4-5 repose sur des capteurs 6 à jauges de contraintes, par l'intermédiaire de paliers à billes ou de grains sphériques 7.

Les débattements du tablier 3-4-5 sont limités par des butées dont chacune comprend :
- une partie mâle 8 solidaire du tablier;
- une partie femelle 9 scellée dans la fosse 1.

Un tel pont-bascule connu présente les inconvénients précités.

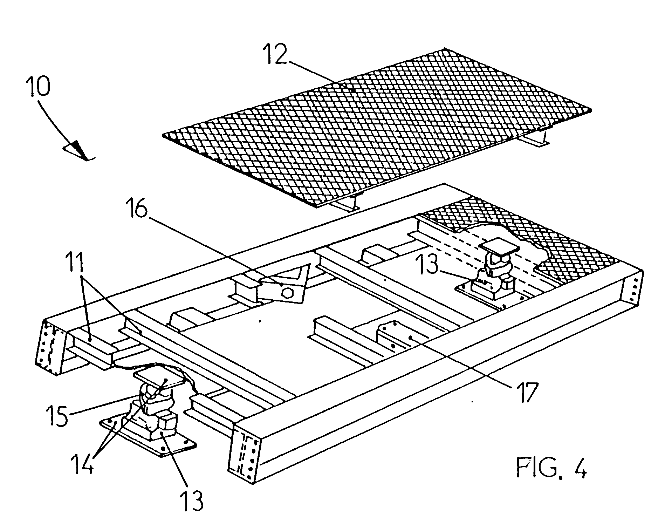

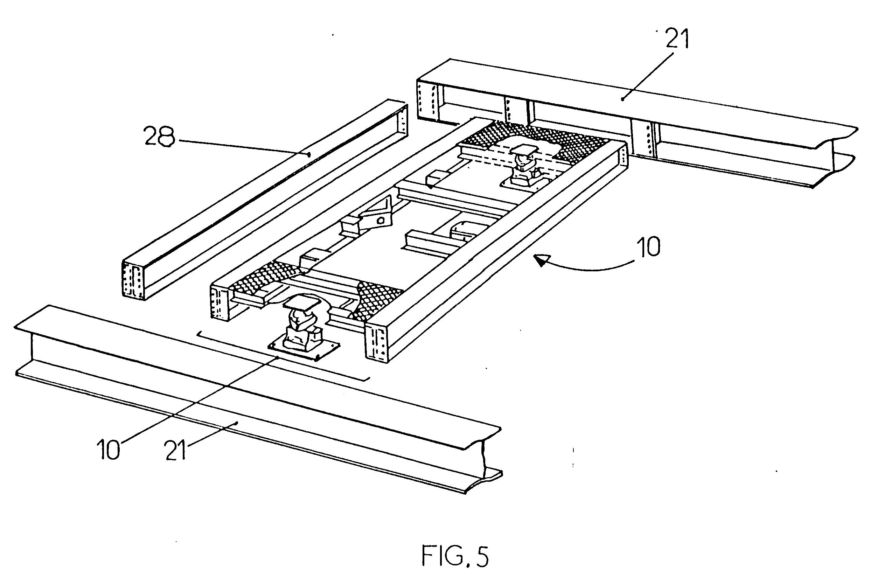

Selon l'invention, on utilise des modules de pesage standard 10 (Fig. 4 et 5) dont chacun comprend :
- une entretoise double 11 en fer à I;
- un panneau métallique démontable 12;
- deux capteurs à jauges de contrainte 13, équipés de leurs supports 14 et de leurs paliers à billes 15;
- un ensemble de butées de choc 16 (éléments mâle et femelle) prépositionnées pour le scellement en fosse;
- des moyens de levage en eux-mêmes connus, non représentés;
- un boîtier 17 pour le raccordement électrique des capteurs 13.

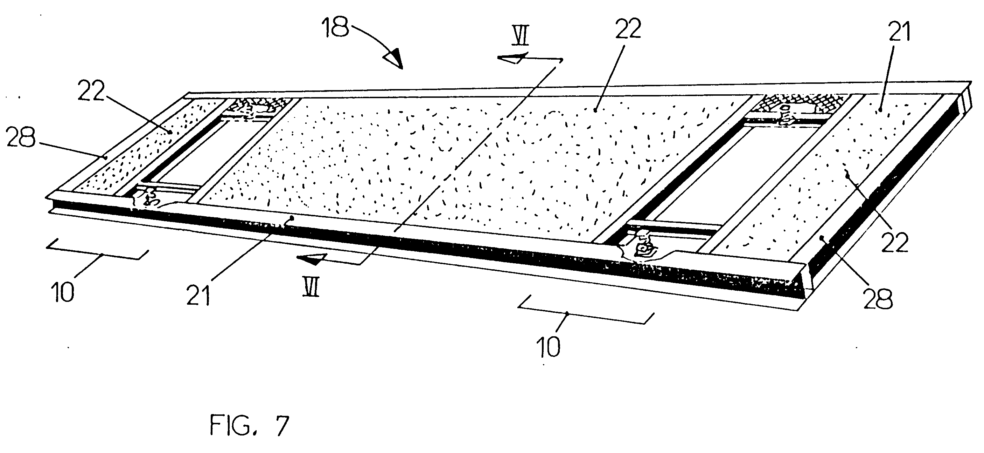

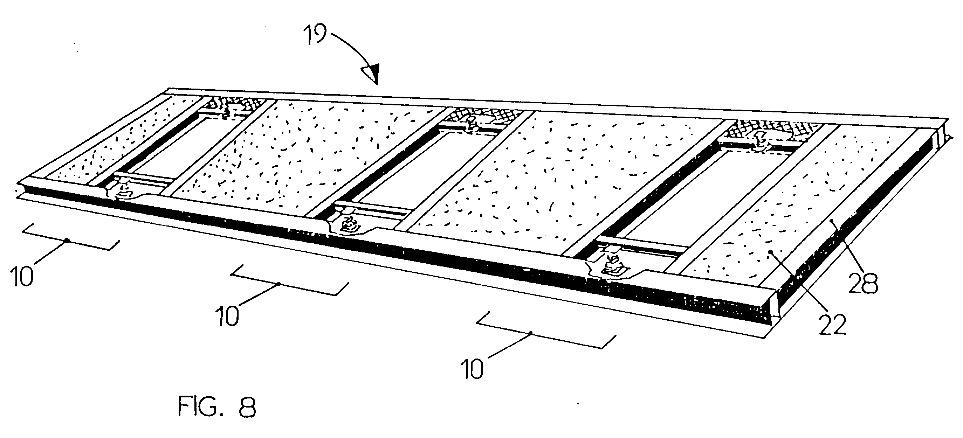

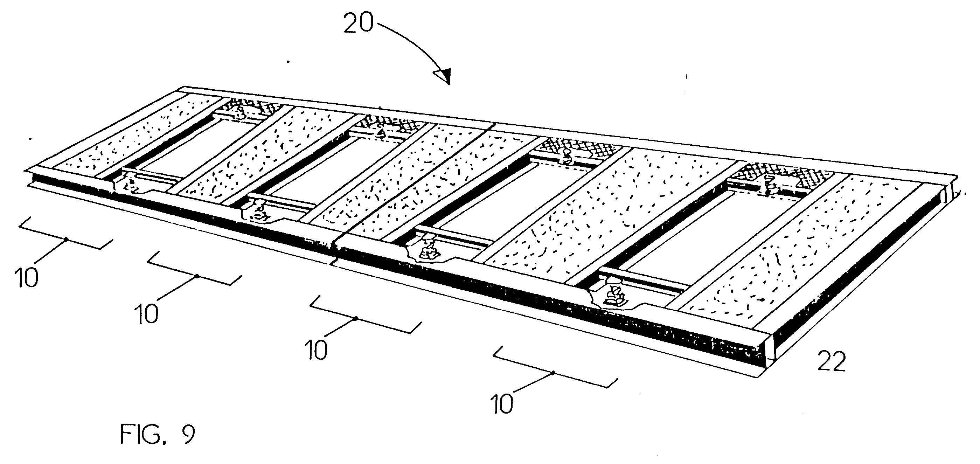

A partir de deux modules 10 (Fig. 5, 7) ou davantage (Fig. 8 et 9), on réalise un tablier 18,19 ou 20 possédant une structure composite.

Pour cela, on place chaque module 10 entre deux longerons métalliques 21 auxquels il est fixé, et entre lesquels la continuité du tablier est assurée par des panneaux de béton 22, coulés en place.

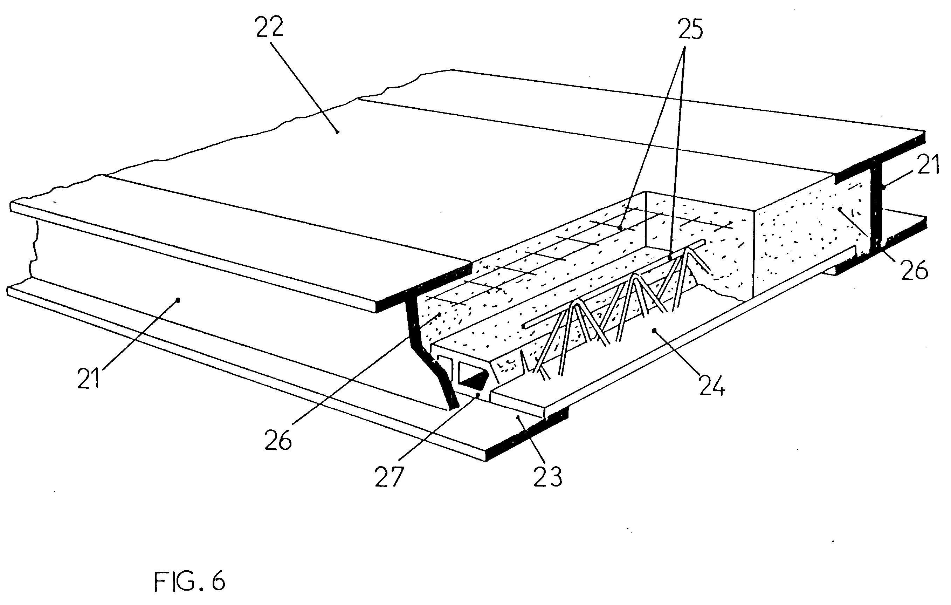

Entre les longerons 21 et sur leur aile inférieure 23, on pose des poutrelles transversales 24 en béton armé préfabriqué. A ces poutrelles 24 est incorporée une partie importante du ferraillage 25 qui armera le béton 26 à couler en place (Fig. 6) pour compléter le panneau 22 concerné.

Sur les poutrelles 24 et entre elles, on pose des hourdis 27 qui constituent la partie inférieure d'un coffrage, dont la périphérie latérale est constituée par les longerons 21 et les modules 10 ou des entretoîses 28 (Fig. 5).

Dans le coffrage perdu ainsi constitué, il suffit de couler le béton 26 pour former facilement le tablier de pesage, sans qu'il y ait ensuite besoin de décoffrer.

Finalement, on constate que le coffrage de la dalle s'effectue sans étai.

Les principaux avantages du pont-bascule selon l'invention sont les suivants :
- réduction du coût de fabrication, les modules de pesage 10 étant standard pour tous les types de ponts bascules,
- réduction du coût de génie civil, le profondeur 29 de la fosse étant de 40 cm seulement.
- accès aisé aux capteurs 13 et aux butées de chocs 16 en enlevant les panneaux métalliques 12.
- réduction du coût et du temps d'exécution de la dalle de béton, du fait de la facilité du coffrage et de la possibilité du coulage de la dalle sans étayer.
- Du fait de sa faible hauteur, le pont-bascule peut être installé en fosse d'une manière classique, ou posé sur le sol. (dans ce cas prévoir des rampes d'accès).

## Revendications

1. Pont-bascule de pesage comprenant une fosse (30) sur le fond de laquelle sont posés des capteurs à jauges de contrainte (13) sur lesquels est posé à son tour un tablier alors que des butées de choc (16) sont prévues pour limiter les débattements du tablier dans la fosse (30) et caractérisé en ce que le tablier (18) posséde une structure composite formée à partir de modules de pesage monoblocs standard (10) reliés entre eux par des longerons (21) incorporés à des panneaux de béton (22).

2. Pont-bascule suivant la revendication 1, caractérisé en ce que chaque module de pesage standard (10) comprend :
- un panneau métallique démontable (12);
- des capteurs à jauges de contrainte (13);
- un ensemble de butées de chocs (16) prépositionnées pour le scellement dans la fosse (30) ;
- un boîtier (17) de raccordement des capteurs (13)

3. Pont-bascule suivant l'une quelconque des revendications précédentes, caractérisé en ce que les capteurs à jauges de contrainte (13) sont munis de supports (14) et de paliers à billes (15).

4. Pont-bascule suivant l'une quelconque des revendications précédentes, caractérisé en ce que chaque module (10) est pourvu de moyens de levage permettant de le positionner à niveau au-dessus du fond de la fosse (30).

5. Pont-bascule suivant l'une quelconque des revendications précédentes, caractérisé en ce que chaque butée (16) comprend une partie mâle et une partie femelle, dont l'une est à sceller dans la fosse (30).

6. Pont-bascule suivant l'une quelconque des revendications précédentes caractérisé en ce que les modules (10) sont reliés entre eux par au moins deux longerons (21) auxquels ils sont fixés , et qui constituent par ailleurs les coffrages latéraux dans lesquels sont coulés les panneaux de béton (22) complétant la dalle du tablier.

7. Pont-bascule suivant l'une quelconque des revendications précédentes, caractérisé en ce que le coffrage inférieur des panneaux de béton (22) est constitué par des hourdis (27) portés par les longerons (21).

8. Pont-bascule suivant l'une quelconque des revendications précédentes caractérisé en ce que les longerons (21) sont des fers en I sur l'aile inférieure (23) desquels sont posées des poutrelles transversales (24) supportant les hourdis (27).

9. Pont-bascule suivant l'une quelconque des revendications précédentes, caractérisé en ce que chaque poutrelle (24) est préfabriquée en béton, incorporant une partie importante du ferraillage (25) des panneaux de béton (22) à couler pour compléter la dalle.

## Patentansprüche

1. Brückenwaage, bestehend aus einer Grube (30), auf deren Boden Meßwertgeber mit Dehnungsmeßgeräten (13) angebracht sind, auf denen wiederum eine Brücke angebracht ist, während andererseits Anschläge (16) vorgesehen sind, um das Ausschlagen der Brücke in der Grube (30) zu begrenzen, dadurch gekennzeichnet, daß die Brücke (18) eine Verbundstruktur aus einteiligen standardisierten Wiegemodulen (10) aufweist, welche untereinander durch in Betonplatten (22) eingelassene Längsträger (21) verbunden sind.

2. Brückenwaage nach Patentanspruch 1, dadurch gekennzeichnet, daß jeder Standard-Wiegemodul (10)
- eine abnehmbare Metallplatte (12),
- Meßwertgeber mit Dehnungsmeßgeräten (13),
- eine Gruppe von zuvor in der Grube (30) fest angebrachten Anschlägen (16),
- einen Anschlußkasten (17) für die Meßwertgeber (13) besitzt.

3. Brückenwaage nach einem beliebigen der o.a. Patentansprüche, dadurch gekennzeichnet, daß die Meßwertgeber mit Dehnungsmeßgeräten (13) mit Trägern (14) und Kugellagern (15) ausgestattet sind.

4. Brückenwaage nach einem beliebigen der o.a. Patentansprüche, dadurch gekennzeichnet, daß jeder Modul mit Hebemitteln versehen ist, mit deren Hilfe er niveaugleich über dem Boden der Grube (30) ausgerichtet werden kann.

5. Brückenwaage nach einem beliebigen der o.a. Patentansprüche, dadurch gekennzeichnet, daß jeder Anschlag (16) aus einem Außen- und einem Innenteil besteht, von denen einer fest in der Grube (30) angebracht ist.

6. Brückenwaage nach einem beliebigen der o.a. Patentansprüche, dadurch gekennzeichnet, daß die Module (10) untereinander über mindestens zwei Längsträger (21) verbunden sind und die zugleich die äußere Verschalung zum Vergießen der Betonplatten (22) bilden, durch die die Brückenplatte vervollständigt wird.

7. Brückenwaage nach einem beliebigen der o.a. Patentansprüche, dadurch gekennzeichnet, daß die innere Verschalung der Betonplatten (22) aus Hohlplatten (27) gebildet wird, die von Längsträgern (21) festgehalten werden.

8. Brückenwaage nach einem beliebigen der o.a. Patentansprüche, dadurch gekennzeichnet, daß die Längsträger aus I-Profilen aus Stahl bestehen , auf deren Innenkante (23) Querträger (24) eingesetzt sind, die wiederum die Hohlplatten (27) festhalten.

9. Brückenwaage nach einem beliebigen der o.a. Patentansprüche, dadurch gekennzeichnet, daß jeder Querträger (24) aus Beton vorgefertigt ist und einen bedeutenden Anteil der Eisenbewehrung (25) der zur Vervollständigung der Brücke aus Beton zu gießenden Platten enthält.

## Claims

1. Platform weighing machine including a pit or ditch (30) on the bottom of which stress gauge sensors (13) are laid, a weighbridge plate being laid on said sensors, whereas impact stops (16) are provided to limit movements of the weighbridge plate inside the pit (30), wherein the weightbridge plate (18) has a composite structure formed from standard monobloc weighing modules (10) interconnected by longitudinal girders (21) incorporated with concrete panels (22).

2. Platform weighing machine according to claim 1, wherein each standard weighing module (10) includes :
- one dismantable metallic panel (12) ;
- stress gauge sensors (13) ;
- a set of prepositioned impact stops (16) for fixing in the pit (30) ;
- a box (17) for connecting the sensors (13).

3. Platform weighing machine according to any one of the preceding claims, wherein the stress gauge sensors (13) are provided with supports (14) and ball bearings (15).

4. Platform weighing machine according to any one of the preceding claims, wherein each module (10) is provided with lifting means able to position it at a level above the bottom of the pit (30).

5. Platform weighing machine according to any one of the preceding claims, wherein each stop (16) includes one male portion and one female portion, one portion being fixed inside the pit (30).

6. Platform weighing machine according to any one of the preceding claims, wherein the modules (10) are interconnected by at least two longitudinal girders to which they are linked and which moreover constitute lateral moulds in which the concrete panels (22) completing the slab of the weightbridge table are cast.

7. Platform weighing machine according to any one of the preceding claims, wherein the lower mould of the concrete panels (22) is constituted by hollow gauged slabs (27) borne by the longitudinal girders (21).

8. Platform weighing machine according to any one of the preceding claims, wherein the longitudinal girders (21) are I-irons, transversal beams (24) supporting the hollow gauged slabs (27) being laid on the lower wing of said irons.

9. Platform weighing machine according to any one of the preceding claims, wherein each beam (24) is prefabricated concrete incorporating one major portion of the reinforcement (25) of the concrete panels (22) to be cast to complete the slab.
